# EUROPEAN PATENT APPLICATION

(11) **EP 4 528 539 A1**
(43) Date of publication of application: **26.03.2025**
(21) Application number: 23806762.3
(22) Date of filing: 09.05.2023
(51) Int. Cl.: G06F 16/435

(54) **INFORMATION PRESENTATION METHOD AND APPARATUS, AND ELECTRONIC DEVICE AND STORAGE MEDIUM**

(30) Priority: 19.05.2022 CN 202210557256
(71) Applicant: Beijing Zitiao Network Technology Co., Ltd., Beijing 100190 (CN)
(72) Inventor: YU, Yajie, Beijing 100028 (CN); JIAO, Yubo, Beijing 100028 (CN); ZHENG, Niwen, Beijing 100028 (CN)
(74) Representative: Dentons UK and Middle East LLP
(86) International application number: PCT/CN2023/092914
(87) International publication number: WO 2023/221810

(57) **Abstract**

Embodiments of the present disclosure provide an information presentation method and apparatus, an electronic device and a storage medium. The method includes: presenting a media playing interface in response to a first trigger operation input by a first user, wherein basic media information of a target media is presented in the media playing interface; and in response to a second trigger operation for triggering the presentation of media recommendation information, presenting, in the media playing interface, at least one piece of media recommendation information associated with the target media.

## Description

### CROSS-REFERENCE TO RELATED APPLICATION(S)

This application claims priority to Chinese Application No. 202210557256.7, filed in the China Patent Office on May 19, 2022, and the disclosures of which are incorporated herein by reference in their entities.

### FIELD

Embodiments of the present disclosure relate to an information processing technology, for example, to an information presentation method and apparatus, an electronic device and a storage medium.

### BACKGROUND

With the progress of the society and the continuous improvement in the quality of life, the attention of the public on arts is also improved. A media, as an art form capable of bringing users wonderful auditory experiences, is highly favored by the public. With the creation of media workers, media works in a media library are also constantly updated, and more and more media works are available for the selection of users.

With the widespread popularity of intelligent terminals, users of the intelligent terminals often listen to the media via media software installed in the intelligent terminals. However, interaction functions opened to the users by related media software are limited, and the presentation of related information of the played media works is often limited to the media itself, such that the presented information is relatively single, which is not conducive to the users to understand and enjoy the media more comprehensively, resulting in a worse usage experience of the media software.

### SUMMARY

Embodiments of the present disclosure provide an information presentation method and apparatus, an electronic device and a storage medium, so as to present media recommendation information in a media playing interface.

In a first aspect, an embodiment of the present disclosure provides an information presentation method, including:
presenting a media playing interface in response to a first trigger operation input by a first user, wherein basic media information of a target media is presented in the media playing interface; and
in response to a second trigger operation for triggering the presentation of media recommendation information, presenting, in the media playing interface, at least one piece of media recommendation information associated with the target media.

In a second aspect, an embodiment of the present disclosure further provides an information presentation apparatus, including:
an interface presentation module, configured to present a media playing interface in response to a first trigger operation input by a first user, wherein basic media information of a target media is presented in the media playing interface; and
an information presentation module, configured to: in response to a second trigger operation for triggering the presentation of media recommendation information, present, in the media playing interface, at least one piece of media recommendation information associated with the target media.

In a third aspect, an embodiment of the present disclosure further provides an electronic device, including:
at least one processor; and
a storage apparatus, configured to store at least one program,
wherein when the at least one program is executed by the at least one processor, the at least one processor is caused to implement the information presentation method according to any one of the embodiments of the present disclosure.

In a fourth aspect, an embodiment of the present disclosure further provides a readable storage medium including a computer program, wherein the computer program, when executed by a computer processor, is configured to execute the information presentation method according to any one of the embodiments of the present disclosure.

### BRIEF DESCRIPTION OF THE DRAWINGS

FIG. 1 is a schematic flowchart of an information presentation method provided in an embodiment of the present disclosure;
FIG. 2 is a schematic interface diagram of a media playing interface in an information presentation method provided in an embodiment of the present disclosure;
FIG. 3 is a schematic flowchart of an information presentation method provided in an embodiment of the present disclosure;
FIG. 4 is a schematic interface diagram of a comment posting interface in an information presentation method provided in an embodiment of the present disclosure;
FIG. 5 is a schematic flowchart of an information presentation method provided in an embodiment of the present disclosure;
FIG. 6 is a schematic flowchart of an information presentation method provided in an embodiment of the present disclosure;
FIG. 7 is a schematic flowchart of an information presentation method provided in an embodiment of the present disclosure;
FIG. 8 is a schematic structural diagram of an information presentation apparatus provided in an embodiment of the present disclosure; and
FIG. 9 is a schematic structural diagram of an electronic device provided in an embodiment of the present disclosure.

### DETAILED DESCRIPTION OF EMBODIMENTS

As used herein, the terms "include" and variations thereof are open-ended terms, i.e., "including, but not limited to". The term "based on" is "based, at least in part, on". The term "one embodiment" means "at least one embodiment"; the term "another embodiment" means "at least one additional embodiment"; and the term "some embodiments" means "at least some embodiments". related definitions of other terms will be given in the following description.

It should be noted that, concepts such as "first" and "second" mentioned in the present disclosure are only intended to distinguish different apparatuses, modules or units, and are not intended to limit the sequence or interdependence of functions executed by these apparatuses, modules or units.

It should be noted that, the modifiers such as "one" and "more" mentioned in the present disclosure are intended to be illustrative and not restrictive, and those skilled in the art should understand that the modifiers should be interpreted as "one or more" unless the context clearly indicates otherwise.

The names of messages or information interacted between a plurality of apparatuses in the embodiments of the present disclosure are for illustrative purposes only and are not intended to limit the scope of these messages or information.

It can be understood that, before technical solutions disclosed in the embodiments of the present disclosure are used, it is necessary to notify a first user of types, usage ranges, usage scenarios and the like of personal information involved in the present disclosure in an appropriate manner according to related laws and regulations, and to obtain the authorization of the first user.

For example, prompt information is sent to the first user in response to receiving an initiative request from the first user, so as to explicitly prompt the first user that an operation which the first user requests to execute needs to obtain and use the personal information of the first user. Therefore, the first user can autonomously choose, according to the prompt information, whether to provide the personal information to software or hardware such as an electronic device, an application program, a server or a storage medium, which executes operations of the technical solutions of the present disclosure.

In an optional but non-restrictive implementation, the manner of sending the prompt information to the first user in response to receiving the initiative request of the first user may be, for example, a pop-up window, and the prompt information may be presented in the pop-up window in a text manner. In addition, the pop-up window may also carry a selection control for enabling the first user to choose "agreeing" or "disagreeing" to provide the personal information to the electronic device.

It can be understood that the above process of notifying and acquiring the authorization of the first user is only schematic, does not constitute a limitation on the implementations of the present disclosure, and other manners satisfying related laws and regulations may also be applied to the implementations of the present disclosure.

It can be understood that data (including, but not limited to, the data itself and the obtainment or usage of the data) involved in the present technical solution should follow the requirements of corresponding laws and regulations, and related specifications.

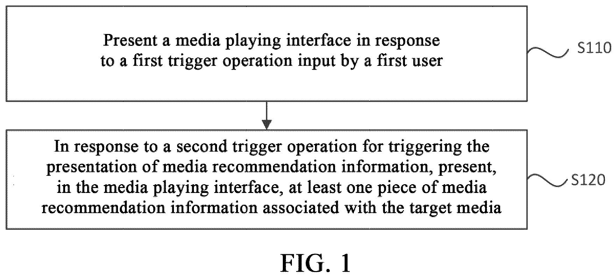

FIG. 1 is a schematic flowchart of an information presentation method provided in an embodiment of the present disclosure, the embodiment of the present disclosure is applicable to a case where a recommendation lightspot of a media is presented to a user who plays the media, the method may be executed by an information presentation apparatus, and the apparatus may be implemented in the form of at least one of software or hardware, and optionally, is implemented by an electronic device, wherein the electronic device may be a mobile terminal, a personal computer (PC) end, a server, or the like.

As shown in FIG. 1, the method includes the following:
S110: presenting a media playing interface in response to a first trigger operation input by a first user, wherein basic media information of a target media is presented in the media playing interface.

The first user may be understood as a user who inputs the first trigger operation. Generally, the first user is a user who plays the target media. The media playing interface may be understood as an interface for presenting information associated with the target media. The target media may be understood as a media presented in the media playing interface, and is generally a media which is being played or paused for playing. Exemplarily, the target media may include a target music, a target video, a target image, or the like. The basic media information may be understood as basic introduction information for representing the target media. Exemplarily, the basic media information may include at least one of a media name of the target media, media collection information, a media posting time, introduction information (a photo or text introduction, and the like) of a media singer, lyric information, or identification information of a media association control, etc.

In the embodiment of the present disclosure, there may be a plurality of manners for generating the first trigger operation, exemplarily, a playing trigger operation for playing the target media, which is input for the target media in a media search interface; or a trigger operation acting on a preset playing presentation control for triggering the presentation of the media playing interface; or inputting preset voice information or gesture information for triggering the presentation of the media playing interface, or inputting an operation for opening a target application program or a target website used for playing target media.

S120: in response to a second trigger operation for triggering the presentation of media recommendation information, presenting, in the media playing interface, at least one piece of media recommendation information associated with the target media.

The second trigger operation may be understood as an operation for presenting the media recommendation information after being triggered. There may be a plurality of generation manners of the second trigger operation for triggering the presentation of media recommendation information, for example, the second trigger operation may be a trigger operation acting on a preset recommendation information presentation control for triggering the presentation of the media recommendation information, or may be an input operation of preset gesture information or voice information for triggering the presentation of the media recommendation information, etc.

In the embodiment of the present disclosure, optionally, the second trigger operation for triggering the presentation of the media recommendation information may also be a first trigger operation which is input by the first user and is used for triggering the presentation of the media playing interface. That is, in response to the first trigger operation input by the first user, at least one piece of media recommendation information associated with the target media is presented in the media playing interface.

The media recommendation information may be understood as information for recommending the target media, or information for presenting to the first user a recommendation reason of recommending the target media.

Optionally, the media recommendation information includes at least one of first-category recommendation information, second-category recommendation information, third-category recommendation information, or fourth-category recommendation information, which is posted by a second user. Optionally, the second-category recommendation information is associated with a collection user of the target media; the third-category recommendation information is associated with a playing user of the target media; and the fourth-category recommendation information is associated with a preset reference fallback parameter corresponding to the target media.

Exemplarily, the second-category recommendation information is configured to present a number of first users who collect the target media; the third-category recommendation information is configured to present a user ranking among all users who have ever played the target media, when the first user plays the target media for the first time; and the fourth-category recommendation information is configured to present at least one of a total number of playing users who have ever played the target media, a number of comments of the target media, or a number of likes of the target media.

Optionally, presenting, in the media playing interface, at least one piece of media recommendation information associated with the target media includes: in response to determining that there are at least two pieces of media recommendation information to be presented, presenting a preset number of pieces of media recommendation information in the media playing interface according to a preset presentation policy, wherein the preset presentation policy includes at least one of a posting time, a preset presentation priority, a matching degree with the first user, or an information popularity of each piece of media recommendation information.

In the embodiment of the present disclosure, the media recommendation information may be divided into different types according to the generation manners of the media recommendation information. Exemplarily, presenting the preset number of pieces of media recommendation information in the media playing interface according to the preset presentation policy may include at least one of the following operations:
randomly selecting a preset number of pieces of media recommendation information from a plurality of pieces of media recommendation information, and presenting the preset number of pieces of media recommendation information in the media playing interface;
selecting a preset number of pieces of media recommendation information from new to old according to the posting time of each piece of media recommendation information, and presenting the preset number of pieces of media recommendation information in the media playing interface;
selecting a preset number of pieces of media recommendation information according to a preset presentation priority corresponding to each type of media recommendation information, and presenting the preset number of pieces of media recommendation information in the media playing interface;
selecting a preset number of pieces of media recommendation information according to an information length corresponding to each type of media recommendation information, and presenting the preset number of pieces of media recommendation information in the media playing interface;
selecting a preset number of pieces of media recommendation information according to a poster corresponding to each type of media recommendation information, and presenting the preset number of pieces of media recommendation information in the media playing interface; or
selecting a preset number of pieces of media recommendation information according to the number of each type of media recommendation information and a preset upper limit of number, and presenting the preset number of pieces of media recommendation information in the media playing interface,
wherein the preset presentation priority corresponding to each type of media recommendation information may be that the presentation priority of the first-category recommendation information posted by the second user is higher than the presentation priority of the second-category recommendation information, the presentation priority of the second-category recommendation information is higher than the presentation priority of the third-category recommendation information, and that the presentation priority of the third-category recommendation information is higher than the presentation priority of the fourth-category recommendation information.

Optionally, presenting, in the media playing interface, at least one piece of media recommendation information associated with the target media includes: in response to determining that there is the media recommendation information posted by the first user and associated with the target media, presenting, in the media playing interface, the media recommendation information posted by the first user. In this way, the first user can intuitively check the media recommendation information posted by himself/herself, thereby improving the user experience.

Optionally, selecting the preset number of pieces of media recommendation information according to the poster corresponding to each type of media recommendation information includes: if the first user who plays the target media posts the media recommendation information associated with the target media, preferentially presenting the media recommendation information which is posted by the first user and is associated with the target media. Exemplarily, the presentation priority of the media recommendation information, which is posted by the first user and is associated with the target media, is set to be the highest.

Exemplarily, selecting the preset number of pieces of media recommendation information according to the number of each type of media recommendation information and the preset upper limit of number may include: presenting at most one piece of media recommendation information among every 6 pieces of media recommendation information.

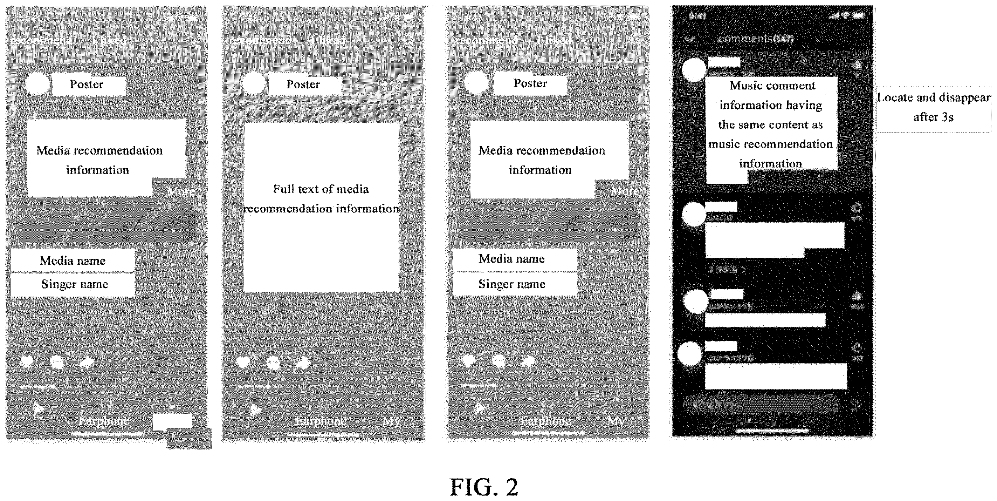

As shown in FIG. 2, basic media information may be presented in the media playing interface, including a media name, a singer name, a collection control (e.g., a heart-shaped button in FIG. 2), a comment control (e.g., a chat-style button in FIG. 2), a media sharing control (e.g., an arrow-form button in FIG. 2), a playing progress bar, a play/pause button (e.g., a triangular button in FIG. 2), a playing mode switching button (e.g., an "Earphone" button in FIG. 2), a personnel information check button (e.g., a "My" button in FIG. 2), a media search button (e.g., a button in the shape of a magnifying lens in a top right corner of FIG. 2), and a media list switching button (e.g., "Recommended" and "I like" in FIG. 2). Media recommendation information and poster identification information of the media recommendation information may also be presented in the media playing interface. All information of the currently presented piece of media recommendation information may be checked by clicking on "More". "..." located in a bottom right corner of a display area of the media recommendation information indicates that there is other media recommendation information, and the presented media recommendation information may be switched in a left-sliding or right-sliding manner.

In order to meet a personalized check requirement of the user, presenting, in the media playing interface, at least one piece of media recommendation information associated with the target media includes: in response to determining that there are at least two pieces of media recommendation information to be presented, presenting a first number of pieces of media recommendation information in the media playing interface, and hiding media recommendation information in addition to the first number of pieces of media recommendation information; and receiving an information presentation switching operation for switching the media recommendation information, and presenting, in the media playing interface, a second number of pieces of media recommendation information in the hidden media recommendation information, wherein the second number is less than or equal to a difference value between a total number of pieces of media recommendation information to be presented and the first number.

It can be understood that the first number and the second number may be set according to actual requirements, which is not limited herein. For example, the first number may be 1, 2, 3, 5, or the like, and the second number may be 5, 8, 10, 20, 30, 50, or the like.

As an optional technical solution in the embodiment of the present disclosure, the information presentation method may further include: receiving a presentation cancel trigger operation input for the media recommendation information, stopping presenting the media recommendation information, and presenting target information corresponding to the presentation cancel trigger operation.

Exemplarily, the media recommendation information of the target media is preferentially loaded into a target presentation area of the media playing interface. When a left sliding operation or an upward sliding operation acting on the media recommendation information is received, preset information, such as poster information of the target media, cover information of an album in which the target media is collected, and the like, is switched for presentation in the target presentation area.

In the embodiment of the present disclosure, if a blank area of the media playing interface is clicked on, lyric information of the target media may be presented in a long lyric mode, wherein the long lyric mode is a mode in which the number of rows of lyrics, which are simultaneously presented in the media playing interface, exceeds a preset threshold value for the number of rows.

In addition, the media playing interface in the embodiment of the present disclosure may also be provided with a recommendation information like control for liking the media recommendation information. When a trigger operation of the second user on the recommendation information like control is received, 1 is added to the number of likes of the media recommendation information. If a like failure is detected, a failure reason to the like failure is determined, and prompt information is generated based on the failure reason.

In the technical solutions provided in the embodiment of the present disclosure, the media playing interface is presented in response to the first trigger operation input by the first user, and the basic media information of the target media is presented in the media playing interface, so that the user can visually learn about basic information related to the target media; and in response to the second trigger operation for triggering the presentation of the media recommendation information, at least one piece of media recommendation information associated with the target media is presented in the media playing interface, so that the user can learn about a recommendation reason of the target media via the media recommendation information. In this way, the user can intuitively focus on a shining point of the target media, the problem of worse media appreciation experience resulting from fewer interaction functions opened to the user by related media software and relatively single presentation of related information of media works is solved; and by increasing the presentation of the media recommendation information, media presentation information is enriched, a media presentation dimension is expanded, and the user is assisted in better understanding and enjoying the media, thereby improving the user experience effect.

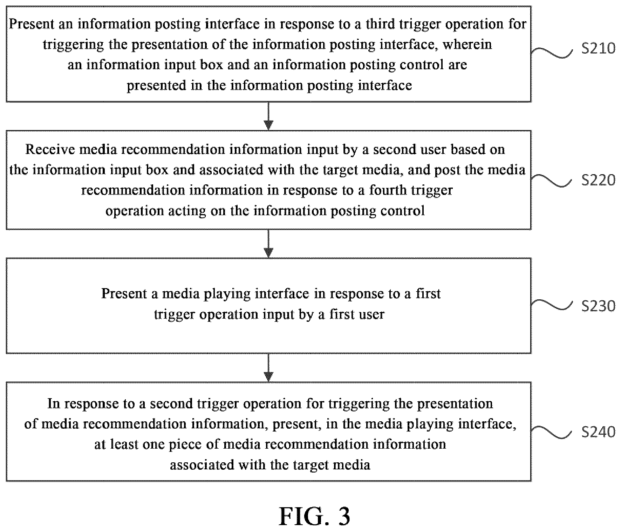

FIG. 3 is a schematic flowchart of an information presentation method provided in an embodiment of the present disclosure. The difference between the present embodiment and the above embodiment lies in that an optional solution of how to generate the media recommendation information is provided. Optionally, if the media recommendation information includes first-category recommendation information posted by the second user, the method further includes: before presenting, in the media playing interface, the at least one piece of media recommendation information associated with the target media, presenting an information posting interface in response to a third trigger operation for triggering the presentation of the information posting interface, wherein an information input box and an information posting control are presented in the information posting interface; and receiving media recommendation information input by the second user based on the information input box and associated with the target media, and posting the media recommendation information in response to a fourth trigger operation acting on the information posting control.

As shown in FIG. 3, the method in the present embodiment may include:
S210: presenting an information posting interface in response to a third trigger operation for triggering the presentation of the information posting interface, wherein an information input box and an information posting control are presented in the information posting interface.

In the embodiment of the present disclosure, the information posting interface may be understood as an interface for posting the media recommendation information. The information posting interface may be a posting interface only used for posting the media recommendation information, and may also be a posting interface shared with the posting of other information. The third trigger operation may be an operation which acts on a preset information posting trigger control for triggering the presentation of the information posting interface, and may also be an input operation of preset gesture information or voice information for triggering the presentation of the information posting interface, etc. The information input box may be understood as an input area for inputting information to be posted. The information posting control may be understood as a control for generating and sending posting request information of the information to be posted after being triggered.

Optionally, the information posting interface includes a comment posting interface. In other words, the media recommendation information may be posted by the comment posting interface. Exemplarily, an information type determination control is further presented in the comment posting interface, and the information type determination control is configured to determine an information posting type of the information to be posted. The information posting type includes media comment information, media recommendation information, and the like. In the present technical solution, the information posting type is determined by the information type determination control, so that personalized posting requirements of the user for the media comment information and the media recommendation information can be satisfied, for example, when the determined information posting type includes the media comment information and the media recommendation information, the media recommendation information and the media comment information may be posted in a one-key manner, and when the user needs to post the media recommendation information and the media comment information at the same time, no repeated input is required, thereby saving on human resources.

S220: receiving media recommendation information input by the second user based on the information input box and associated with the target media, and posting the media recommendation information in response to a fourth trigger operation acting on the information posting control.

The second user may be understood as a user capable of posting interaction information associated with the target media. The second user may include the first user, or may not include the first user. In the embodiment of the present disclosure, the second user may be a user having a posting permission of posting the media recommendation information.

In the embodiment of the present disclosure, optionally, receiving the media recommendation information input by the second user based on the information input box and associated with the target media includes: receiving the information to be posted input based on the information input box, and using the information to be posted as the media recommendation information associated with the target media.

If various types of information may be input in an information input interface, optionally, different information input boxes may be set for each type of information, or information input in the same information input box may be posted as different types of information.

In order to distinguish different information types, the information type determination control may be set. The information type determination control may be an information type selection control. Exemplarily, different information type selection controls may be set for different information types, or the information type determination control may be an information type switching control for switching the information type after being triggered.

Optionally, receiving the media recommendation information input by the second user based on the information input box and associated with the target media includes: receiving the information to be posted input based on the information input box; and determining, based on the information type determination control, that the information type of the information to be posted includes media recommendation information, and using the information to be posted as the media recommendation information associated with the target media.

The information to be posted may be understood as information which is input in the information input box and is to be posted by the first user. Determining, based on the information type determination control, whether the information type of the information to be posted includes the media recommendation information may include: performing determination according to whether the information type selection control is in a selected state, wherein the information type selection control is used for selecting whether the information type of the information to be posted includes the media recommendation information; or determining whether the information type selection control is switched to a state in which the information type of the information to be posted includes the media recommendation information.

A default copywriting may be presented in the information input box. For example, prompt information may be input. When information to be posted of different information types is input, the default copywriting may be the same or different. Following the above example, if an option of "Simultaneously posted as media recommendations" is selected, the default copywriting may be "Comments more than 10 words will become a song recommendation reason"; and if the option of "Simultaneously posted as a media recommendations" is not selected, the default copywriting may be "Write down what you want to say".

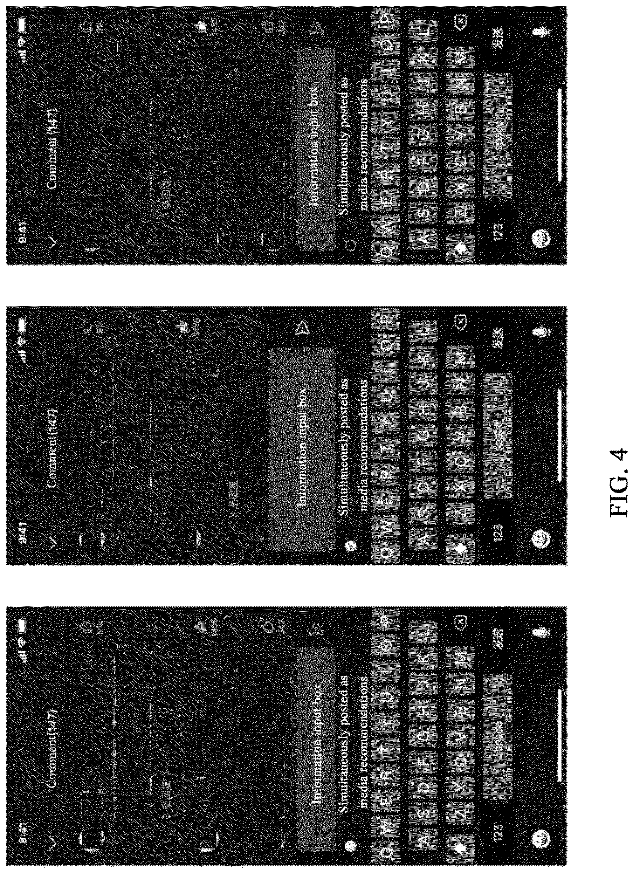

As shown in FIG. 4, it is taken as an example that the media recommendation information is posted based on the comment posting interface, the information type determination control of the media recommendation information may be presented below the information input box, and the information type determination control is identified as "Simultaneously posted as media recommendations" and "select an information input part" (circle) in the figure. If the option of "Simultaneously posted as media recommendations" is selected, the option of "select an information input part" is filled with a selected identifier, such as " √ " or filled with a preset color, and after the selected identifier is filled, when information input in the information input box is posted, the input information may be posted as media comment information and media recommendation information at the same time; and if the option of "Simultaneously posted as a media recommendations" is not selected, the option of "select an information input part" may present a blank state, at this time, when the information is posted, the information input in the information input box is posted as media comment information. With continued reference to FIG. 4, the first figure and the third figure on the left side in FIG. 4 are respectively schematic diagrams of presenting different default copy writings in the information input box in a case where the option of "Simultaneously posted as media recommendations" is checked and not checked, the default copywriting may be "Your comments will become a song recommendation reason" or "Write down what you want to say...", and the second figure on the left side is a schematic diagram in which the information to be posted is input in the information input box, wherein the information to be posted is not shown.

S230: presenting a media playing interface in response to a first trigger operation input by the first user, wherein basic media information of target media is presented in the media playing interface.

S240: in response to a second trigger operation for triggering the presentation of media recommendation information, presenting, in the media playing interface, at least one piece of media recommendation information associated with the target media.

Optionally, the information presentation method in the present embodiment further includes: skipping to the comment posting interface in response to receiving a fifth trigger operation input for the media recommendation information.

The fifth trigger operation may be understood as an operation which is input based on the media recommendation information and is used for skipping to the comment posting interface. Exemplarily, the fifth trigger operation may be a click operation of clicking on the media recommendation information, or an operation of triggering a display area of the media recommendation information, or an operation generated by acting on a preset skip control, etc.

Optionally, skipping to the comment posting interface includes: skipping to the comment posting interface, and presenting comment information associated with the target media.

Optionally, skipping to the comment posting interface includes: skipping to the comment posting interface, and presenting, in the comment posting interface, the media recommendation information associated with the target media, wherein the media recommendation information is highlighted and presented in a first preset manner.

Optionally, skipping to the comment posting interface includes: skipping to the comment posting interface in response to determining that the comment posting interface includes media comment information the same as the media recommendation information, wherein the media comment information the same as the media recommendation information is highlighted and presented in the comment posting interface in a second preset manner.

There may be a plurality of highlighted and presented forms. The first preset manner and the second preset manner are both highlighted and presented forms. In the embodiment of the present disclosure, the first preset manner and the second preset manner may be the same or different. Exemplarily, the highlighted and presented form may be at least one of presentation manners such as highlighted and presented presentation, presented in an enlarged font, presented in a changed font color, presented in a black font, presented in a bold font, or music recommendations are presented at a preset position of the comment posting interface. In other words, the first preset manner and the second preset manner may be at least one of the above presentation manners. In this way, it can be ensured that the user checks the entire content of the media recommendation information more clearly. Since the media comment information the same as the media recommendation information is highlighted and presented in the comment posting interface in the second preset manner, while the media recommendation information is highlighted and presented, information linkage presentation between the media recommendation information and the media comment information may also be implemented.

Optionally, if an information length of the media recommendation information exceeds a preset presentation length corresponding to the media playing interface, a part of information in the media recommendation information is presented based on the preset presentation length, a full-text check trigger operation for the media recommendation information is received, and hidden information in the media recommendation information is presented.

The full-text check trigger operation may be an operation acting on the full-text check control, for example, may be a click operation of clicking on the full-text check control or a sliding operation of sliding the full-text check control, etc. The full-text check control may be understood as a control which is used for presenting the media recommendation information after being triggered and is capable of presenting more information compared with the presented partial information. There may be a plurality of presentation forms of the full-text check control, for example, may be an identifier presented in the media playing interface in a pattern or text form. The full-text check control may also be presented in the presentation area of the media recommendation information. In the embodiment of the present disclosure, the full-text check control may be a control for presenting hidden information of the media recommendation information after being triggered.

Exemplarily, the full-text check control may be a control for presenting all information of the media recommendation information after being triggered, or may be a control for presenting remaining information other than presented information in the media recommendation information after being triggered. In the present technical solution, the advantages of presenting the full-text check control lie in that not only can the presentation length of the media recommendation information on the media playing interface be ensured to regularize the presentation layout of the media playing interface, but the user can also check all content of the media recommendation information by triggering the full-text check control.

It can be understood that the preset presentation length may be set according to actual situations, which is not limited herein. It is taken as an example that the preset presentation length is A words, if the length of the media recommendation information exceeds the A words, 2 words are subtracted from the A words in the media recommendation information, and an "Unfold" button is displayed for presenting the hidden information in the media recommendation information after being triggered.

Optionally, the information presentation method in the present embodiment further includes: receiving a sixth trigger operation acting on the full-text check control, unfolding an information reading panel, and presenting the hidden information of the media recommendation information in the information reading panel.

Exemplarily, the information reading panel may be a reading window that is full of a terminal screen for playing the target media, or a reading window that is full of the media playing interface, etc. Optionally, the size of the information reading panel may be determined according to the information length of the media recommendation information. The information length may be represented by the number of included characters or the number of display rows.

In addition, in the embodiment of the present disclosure, the hidden information of the media recommendation information may also be presented in response to a seventh trigger operation input for the presentation area of the media recommendation information. Exemplarily, the seventh trigger operation may be a trigger operation acting on the presentation area of the media recommendation information, for example, a cursor hovering operation or a click operation, etc.

In the embodiment of the present disclosure, there may be a plurality of trigger manners of exiting the information reading panel, for example, at least one of operations of playing a screen lock operation (including an automatic screen lock operation and a manual screen lock operation) of a terminal device of the target media, switching the target media, triggering a preset area, or triggering a preset panel exit control for exiting the information reading panel after being triggered.

Optionally, the information presentation method in the embodiment of the present disclosure further includes: in a case where the information reading panel is in an unfolded state, if the playing of the target media is completed, controlling the target media to be replayed, that is, repeatedly playing the target media, so as to avoid the influence on the user for checking the media recommendation information of the target media after the media is switched.

Continuing to use FIG. 2, the first figure and the third figure on the left side are schematic effect diagrams of presenting music recommendation information of music basic information in a music playing interface; the second figure on the left side is a schematic effect diagram of displaying the music recommendation information in a full-screen manner via the information reading panel; the fourth figure on the left side is a schematic effect diagram of skipping to the comment posting interface for linkage presentation with media comment information, wherein a presentation position of the media comment information having the same content as the media recommendation information may be automatically located, the media comment information may also be highlighted and presented within a preset time period, for example, a default display state may be restored after the media comment information is highlighted and presented for 3 seconds.

In the technical solutions of the embodiment of the present disclosure, a posting entry of the media recommendation information is provided for the second user by the information posting interface, and different second users may post the media recommendation information for the same media, so that media information communication between the second users can be realized, and the interaction experience effect of the users is improved.

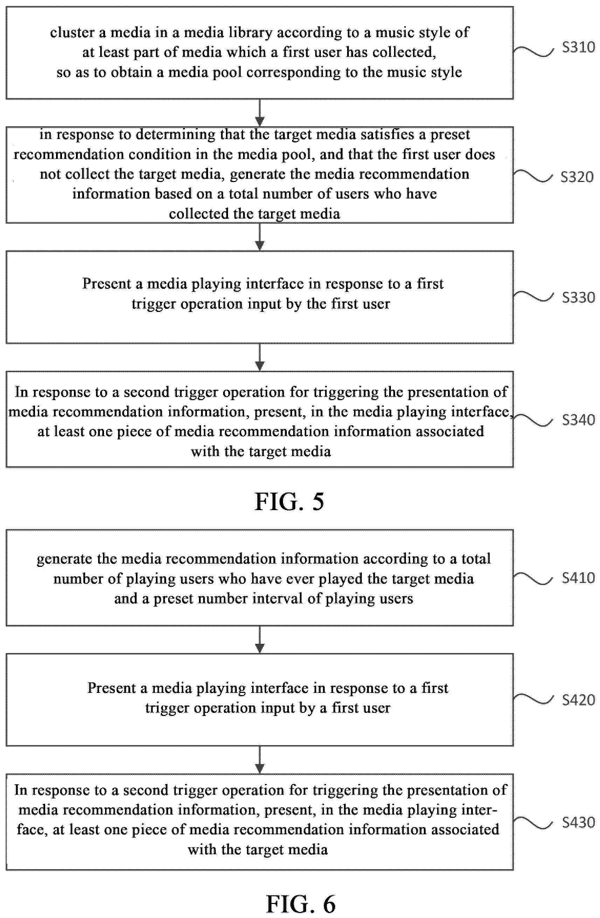

FIG. 5 is a schematic flowchart of an information presentation method provided in an embodiment of the present disclosure. The difference between the present embodiment and the above embodiment lies in a user interaction angle, and the present embodiment provides an optional solution of generating media recommendation information based on big data. Optionally, the method further includes: before presenting, in the media playing interface, the at least one piece of media recommendation information associated with the target media, clustering a media in a media library according to a music style of at least part of media which the first user has collected, so as to obtain a media pool corresponding to the music style; and in response to determining that the target media satisfies a preset recommendation condition in the media pool, and that the first user does not collect the target media, generating the media recommendation information based on a total number of users who have collected the target media.

As shown in FIG. 5, the method in the present embodiment includes:
S310: clustering a media in a media library according to a music style of at least part of media which a first user has collected, so as to obtain a media pool corresponding to the music style.

The music style may be understood as information for representing a representative unique appearance of a media work as a whole. The music style may also be referred to as a media style, a media music style, a media type or a media genre. The at least part of media which the first user has collected may be determined based on the latest playing time of each media or determined based on the number of playing times of each media. For example, at least part of media which the first user has collected may be media which has been played by the first user within a latest period of time in the collected media or media of which the total number of playing times has exceeded a preset threshold value of number of times in the collected media. It can be understood that at least part of media which the first user has collected may also be all media which the first user has collected.

Optionally, clustering the media in the media library according to the music style of at least part of media which the first user has collected includes: determining the music style of at least part of media which the first user has collected, counting the total number of media corresponding to each music style, and using, as a music style to be clustered, the music style in which the total number of media satisfies a preset screening condition; clustering the media in the media library according to the music style to be clustered, so as to obtain a media pool corresponding to the music style to be clustered; or, clustering the media in the media library for all music styles corresponding to the at least part of media which the first user has collected, so as to obtain the media pool corresponding to the music style to be clustered. For example, all music styles corresponding to the media collected by the user may be determined, ranking is performed according to the popularity or user preference degrees of the music styles, and the top N music styles are used as the music styles to be clustered, so as to cluster the media in the media library to obtain the media pool.

In the embodiment of the present disclosure, optionally, if the number of media collected by the user is less than a preset collection number threshold value, the music style to be clustered is determined according to a preset music style determination factor, wherein the preset music style determination factor may be a preset substitute music style, or the popularity of each music style in the media library, etc.

S320: in response to determining that the target media satisfies a preset recommendation condition in the media pool, and that the first user does not collect the target media, generating the media recommendation information based on a total number of users who have collected the target media.

The preset recommendation condition may include at least one of the following: a user preference degree of the target media reaches a preset preference degree condition, wherein the preset preference degree condition may be determined based on the user preference degrees of at least part of media in the media pool; a playback volume of the target media reaches a preset playback volume threshold value, wherein the preset playback volume threshold value may be determined based on the playback volumes of at least part of media in the media pool; or the popularity of the target media reaches a preset popularity threshold value, wherein the preset popularity threshold value may be determined based on the popularity of at least part of media in the media pool, etc.

Optionally, generating the media recommendation information based on a total number of users who have collected the target media includes: filling the total number of users who have collected the target media in preset same-preference recommendation copywriting information, so as to obtain the media recommendation information. For example, it may be that x unknown rock fans also collect this song.

Optionally, if the target media is in the media pool, a music style label of the target media is compared with a music style corresponding to the media pool, so as to ensure the accuracy of a clustering result. Exemplarily, if the music style label of the target media is consistent with the music style corresponding to the media pool, it is determined whether the target media satisfies the preset recommendation condition in the media pool, and that whether the first user does not collect the target media.

S330: presenting a media playing interface in response to a first trigger operation input by the first user, wherein basic media information of target media is presented in the media playing interface.

S340: in response to a second trigger operation for triggering the presentation of media recommendation information, presenting, in the media playing interface, at least one piece of media recommendation information associated with the target media.

It should be noted that the media recommendation information may be generalized, including, but not limited to, narrowly-defined media recommendation information. The media recommendation information presented in the media playing interface is determined based on a preset presentation policy, and may include narrowly-defined media recommendation information, or may not include the narrowly-defined media recommendation information.

In the technical solutions of the present embodiment, the media recommendation information may be generated according to the media collected by the first user and the collection user of the target media, that is, the preference information of the first user is considered, and the public collection information of the target media is also considered, so that the generated media recommendation information can be more adapted to the target media, the matching degree among the media recommendation information, the target media and the first user is improved, and meanwhile, the media recommendation information is enriched.

FIG. 6 is a schematic flowchart of an information presentation method provided in an embodiment of the present disclosure. The difference between the present embodiment and the above embodiment lies in a user interaction angle, and the present embodiment provides another optional solution of generating media recommendation information based on big data. Optionally, the method further includes: before presenting, in the media playing interface, the at least one piece of media recommendation information associated with the target media, generating the media recommendation information according to a total number of playing users who have ever played the target media and a preset number interval of playing users.

As shown in FIG. 6, the method in the present embodiment may include:
S410: generating the media recommendation information according to a total number of playing users who have ever played the target media and a preset number interval of playing users.

The preset number interval of playing users may be set according to actual requirements, which is not limited herein in terms of value. The number intervals of playing users corresponding to different media may be the same or different. For example, different number intervals of playing users may be set for different media.

Optionally, generating the media recommendation information according to the total number of playing users who have ever played the target media and the preset number interval of playing users includes: classifying the media in the media library to obtain at least two media pools, wherein each media pool includes at least one media; and determining, from the at least two media pools, a target media pool to which the target media belongs, and generating the media recommendation information according to the total number of playing users who have ever played the target media and the preset number interval of playing users corresponding to the target media pool.

Classifying the media in the media library to obtain at least two media pools includes: classifying the media in the media library according to a music style corresponding to each media in the media library, and dividing the media with the same music style into the same media pool; or, classifying the media in the media library according to a style label of a singer corresponding to each media in the media library, and dividing the media of singers with the same style label into the same media pool; or, classifying the media in the media library according to a preset level corresponding to each media in the media library, so as to obtain at least two media pools, etc.

Optionally, the preset number interval of playing users corresponding to the target media pool may be different. For example, for the media in the first media pool, the number interval of playing users may be 0 to P, wherein P is 0 or a positive integer; and for the media in the second media pool, the number interval of playing users may be m to n, wherein m and n are positive integers, and n is greater than m. Following the above example, if the target media belongs to the first media pool, the media recommendation information matches the media of which the calculated total number of playing users is less than p. If the target media belongs to the second media pool, the media recommendation information matches the media of which the calculated total number of playing users is greater than m and less than n.

Exemplarily, if the total number of playing users who have ever played the target media is within the preset number interval of playing users corresponding to the target media pool, the media recommendation information is generated. On this basis, exemplarily, before the media recommendation information is generated, a core interaction index of the target media may be further determined, and if the core interaction index reaches a preset standard-reaching condition, the media recommendation information is generated.

S420: presenting a media playing interface in response to a first trigger operation input by a first user, wherein basic media information of target media is presented in the media playing interface.

S430: in response to a second trigger operation for triggering the presentation of media recommendation information, presenting, in the media playing interface, at least one piece of media recommendation information associated with the target media.

It should be noted that the media recommendation information may be generalized, including, but not limited to, narrowly-defined media recommendation information. The media recommendation information presented in the media playing interface is determined based on a preset presentation policy, and may include narrowly-defined media recommendation information, or may not include the narrowly-defined media recommendation information.

In the technical solutions of the present embodiment, the preference degree of the user for the media may be fully considered, and media recommendation information matching alternative media is generated therefor to serve as alternative media recommendation information, so that the user can conveniently learn about the target media from the dimension of the number of playing users, and the media presentation information is enriched.

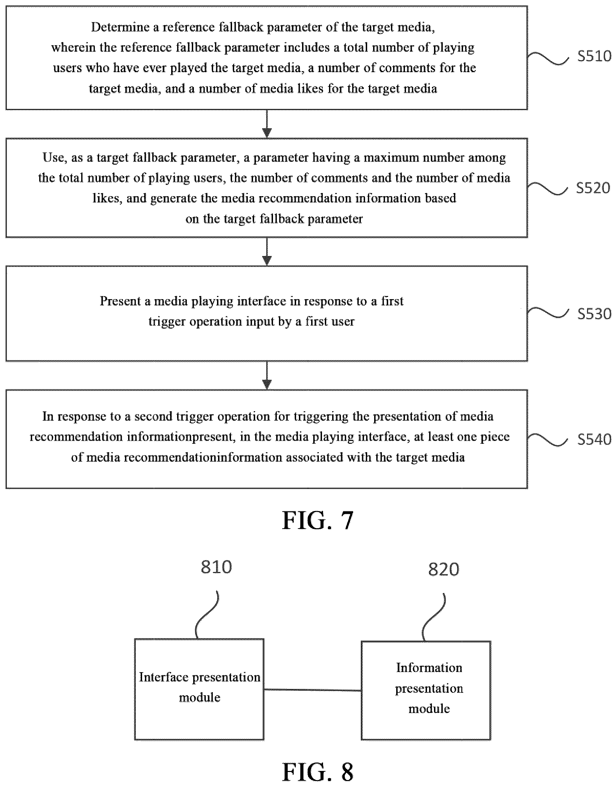

FIG. 7 is a schematic flowchart of an information presentation method provided in an embodiment of the present disclosure. The difference between the present embodiment and the above embodiment lies in that a guarantee solution of generating media recommendation information is provided, so as to ensure that the media recommendation information can be smoothly presented. Optionally, the method further includes: before presenting, in the media playing interface, the at least one piece of media recommendation information associated with the target media, determining a reference fallback parameter of the target media, wherein the reference fallback parameter includes a total number of playing users who have ever played the target media, a number of comments for the target media, and a number of media likes for the target media; and using, as a target fallback parameter, a parameter having a maximum number among the total number of playing users, the number of comments and the number of media likes, and generating the media recommendation information based on the target fallback parameter.

As shown in FIG. 7, the method in the present embodiment includes:
S510: determining a reference fallback parameter of the target media, wherein the reference fallback parameter includes a total number of playing users who have ever played the target media, a number of comments for the target media, and a number of media likes for the target media.

The reference fallback parameter may be understood as a preset parameter which needs to be referenced for generating the media recommendation information, or a preset alternative parameter associated with the media recommendation information.

Optionally, the total number of playing users who have ever played the target media, the number of comments of the target media and the number of media likes of the target media may be the total number of playing users who have ever played the target media, the number of comments of the target media and the number of media likes of the target media within a preset time period, wherein the preset time period may be set according to actual requirements, and is not limited herein, for example, may be the latest week, the last month, the last three months, and the like. The total number of playing users may be understood as a total number of all users who have ever played the target media within a first preset time period. The number of comments of the target media may be understood as a total number of pieces of evaluation information, which are posted within a second preset time period and are used for evaluating the target media. The number of media likes may be understood as a total number of likes for the target media, which are obtained within a third preset time period. The number of media likes is counted based on a like record of a preset like control, the like record includes a like time and a like state, and the like state includes liked and like canceled.

It can be understood that time periods corresponding to the first preset time period, the second preset time and the third preset time period may be the same time period or different time periods.

S520: using, as a target fallback parameter, a parameter having a maximum number among the total number of playing users, the number of comments and the number of media likes, and generating the media recommendation information based on the target fallback parameter.

The target fallback parameter may be understood as a finally determined parameter for generating the media recommendation information. Exemplarily, the total number of playing users of the target media, the number of comments and the number of media likes are compared to find, as the target fallback parameter, a parameter having a maximum number or a maximum value among the total number of playing users, the number of comments and the number of media likes.

Optionally, generating the media recommendation information based on the target fallback parameter includes: adding 1 to a value of the target fallback parameter to obtain a target presentation value, and inputting the target presentation value into a preset guarantee copywriting template to obtain the media recommendation information. For example, there are X users who have ever played the song, or the song has X comments, or the number of likes of the song is X, etc.

S530: presenting a media playing interface in response to a first trigger operation input by a first user, wherein basic media information of target media is presented in the media playing interface.

S540: in response to a second trigger operation for triggering the presentation of media recommendation information, presenting, in the media playing interface, at least one piece of media recommendation information associated with the target media.

It should be noted that the media recommendation information may be generalized, including, but not limited to, narrowly-defined media recommendation information. The media recommendation information presented in the media playing interface is determined based on a preset presentation policy, and may include narrowly-defined media recommendation information, or may not include the narrowly-defined media recommendation information.

In the technical solutions of the present embodiment, the media recommendation information may be generated based on the reference fallback parameter of the target media, so as to provide a guarantee solution for generating the media recommendation information, thereby ensuring the smooth presentation of the media recommendation information.

FIG. 8 is a schematic structural diagram of an information presentation apparatus provided in an embodiment of the present disclosure, and as shown in FIG. 8, the apparatus includes an interface presentation module 810 and an information presentation module 820.

The interface presentation module 810 is configured to present a media playing interface in response to a first trigger operation input by a first user, wherein basic media information of target media is presented in the media playing interface; and the information presentation module 820 is configured to: in response to a second trigger operation for triggering the presentation of media recommendation information, present, in the media playing interface, at least one piece of media recommendation information associated with the target media.

In the technical solutions provided in the embodiment of the present disclosure, the media playing interface is presented in response to the first trigger operation input by the first user, and the basic media information of the target media is presented in the media playing interface, so that the user can visually learn about basic information related to the target media; and in response to the second trigger operation for triggering the presentation of the media recommendation information, at least one piece of media recommendation information associated with the target media is presented in the media playing interface, so that the user can learn about a recommendation reason of the target media via the media recommendation information. In this way, the user can intuitively focus on a shining point of the target media, the problem of worse media appreciation experience resulting from fewer interaction functions opened to the user by related media software and relatively single presentation of related information of media works is solved; and by increasing the presentation of the media recommendation information, media presentation information is enriched, a media presentation dimension is expanded, and the user is assisted in better understanding and enjoying the media, thereby improving the user experience effect.

Based on the above optional technical solutions, optionally, the media recommendation information includes first-category recommendation information posted by a second user, the media recommendation information may be used for presenting a number of first users who collect the target media, the media recommendation information may be used for presenting a user ranking among all users who have ever played the target media, when the first user plays the target media for the first time, and the media recommendation information may be also used for presenting at least one of a total number of playing users who have ever played the target media, a number of comments of the target media, or a number of likes of the target media.

Based on the above optional technical solutions, optionally, the information presentation apparatus further includes:
a posting interface trigger module, configured to: before presenting, in the media playing interface, the at least one piece of media recommendation information associated with the target media, present an information posting interface in response to a third trigger operation for triggering the presentation of the information posting interface, wherein an information input box and an information posting control are presented in the information posting interface; and
an information posting module, configured to receive media recommendation information input by the second user based on the information input box and associated with the target media, and post the media recommendation information in response to a fourth trigger operation acting on the information posting control.

Based on the above optional technical solutions, optionally, the information posting interface includes a comment posting interface, an information type determination control is further presented in the comment posting interface, the information type determination control is configured to determine an information posting type of information to be posted, the information posting type includes at least one of media comment information or media recommendation information, and the information posting module is configured to:
receive the information to be posted input based on the information input box; and
determine, based on the information type determination control, that an information type of the information to be posted includes media recommendation information, and use the information to be posted as the media recommendation information associated with the target media.

Based on the above optional technical solutions, optionally, the information presentation apparatus further includes:
an interface skipping module, configured to skip to the comment posting interface in response to receiving a fifth trigger operation input for the media recommendation information.

Based on the above optional technical solutions, optionally, the interface skipping module is configured to:
skip to the comment posting interface, and present comment information associated with the target media.

Based on the above optional technical solutions, optionally, the interface skipping module is configured to:
skip to the comment posting interface, and present, in the comment posting interface, the media recommendation information associated with the target media, wherein the media recommendation information is highlighted and presented in a first preset manner.

Based on the above optional technical solutions, optionally, the interface skipping module is configured to:
skip to the comment posting interface in response to determining that the comment posting interface includes media comment information the same as the media recommendation information, wherein the media comment information the same as the media recommendation information is highlighted and presented in the comment posting interface in a second preset manner.

Based on the above optional technical solutions, optionally, the information presentation apparatus further includes:
a media tool forming module, configured to: before presenting, in the media playing interface, the at least one piece of media recommendation information associated with the target media, cluster a media in a media library according to a music style of at least part of media which the first user has collected, so as to obtain a media pool corresponding to the music style; and
a media recommendation information generation module, configured to: in response to determining that the target media satisfies a preset recommendation condition in the media pool, and that the first user does not collect the target media, generate the media recommendation information based on a total number of users who have collected the target media.

Based on the above optional technical solutions, optionally, the information presentation apparatus further includes:
a media recommendation information generation module, configured to: before presenting, in the media playing interface, the at least one piece of media recommendation information associated with the target media, generate the media recommendation information according to a total number of playing users who have ever played the target media and a preset number interval of playing users.

Based on the above optional technical solutions, optionally, the media recommendation information generation module is configured to:
classify the media in the media library to obtain at least two media pools, wherein each media pool includes at least one media; and
determine, from the at least two media pools, a target media pool to which the target media belongs, and generate the media recommendation information according to the total number of playing users who have ever played the target media and the preset number interval of playing users corresponding to the target media pool.

Based on the above optional technical solutions, optionally, the information presentation apparatus further includes:
a fallback parameter acquisition module, configured to: before presenting, in the media playing interface, the at least one piece of media recommendation information associated with the target media, determine a reference fallback parameter of the target media, wherein the reference fallback parameter includes a total number of playing users who have ever played the target media, a number of comments for the target media, and a number of media likes for the target media; and
a media recommendation information generation module, configured to: use, as a target fallback parameter, a parameter having a maximum number among the total number of playing users, the number of comments and the number of media likes, and generate the media recommendation information based on the target fallback parameter.

Based on the above optional technical solutions, optionally, the information presentation module is configured to:
in response to determining that there are at least two pieces of media recommendation information to be presented, present a preset number of pieces of media recommendation information in the media playing interface according to a preset presentation policy, wherein the preset presentation policy includes at least one of a posting time, a preset presentation priority, a matching degree with the first user, or an information popularity of each piece of media recommendation information.

Based on the above optional technical solutions, optionally, the information presentation module is configured to:
in response to determining that there are at least two pieces of media recommendation information to be presented, present a first number of pieces of media recommendation information in the media playing interface, and hide media recommendation information exceeding the first number; and
receive an information presentation switching operation for switching the media recommendation information, and present, in the media playing interface, a second number of pieces of media recommendation information in the hidden media recommendation information, wherein the second number is less than or equal to a difference value between a total number of pieces of media recommendation information to be presented and the first number.

Based on the above optional technical solutions, optionally, the information presentation module is configured to:
in response to determining that there is the media recommendation information posted by the first user and associated with the target media, present, in the media playing interface, the media recommendation information posted by the first user.

The information presentation apparatus provided in the embodiment of the present disclosure may execute the information presentation method provided in any one of the embodiments of the present disclosure, and has corresponding functional modules and effects for executing the method.

It should be noted that the units and modules included in the above apparatus are only divided according to functional logic, but are not limited to the above division, as long as corresponding functions may be implemented; and in addition, the names of the functional units are merely for ease of distinguishing from each other, and are not intended to limit the protection scope of the embodiments of the present disclosure.

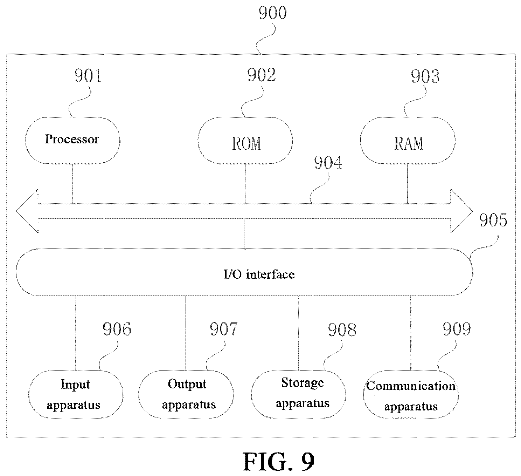

FIG. 9 is a schematic structural diagram of an electronic device provided in an embodiment of the present disclosure. Reference is made to FIG. 9 below, FIG. 9 illustrates a structural schematic diagram of an electronic device (e.g., a terminal device or a server in FIG. 9) 900 suitable for implementing an embodiment of the present disclosure. The terminal device in the embodiment of the present disclosure may include, but is not limited to, mobile terminals such as mobile phones, notebook computers, digital broadcast receivers, personal digital assistants (PDAs), portable Android devices (PADs), portable multimedia players (PMPs), in-vehicle terminals (e.g., in-vehicle navigation terminals), and the like, and fixed terminals such as digital TVs, desktop computers, etc. The electronic device shown in FIG. 9 is merely an example and should not bring any limitation to the functions and use ranges of the embodiments of the present disclosure.

As shown in FIG. 9, the electronic device 900 may include a processor (e.g., a central processing unit, a graphics processing unit, or the like) 901, which may perform various suitable actions and processes in accordance with a program stored in a read-only memory (ROM) 902 or a program loaded from a storage apparatus 908 into a random access memory (RAM) 903. In the RAM 903, various programs and data needed by the operations of the electronic device 900 are also stored. The processor 901, the ROM 902 and the RAM 903 are connected to each other via a bus 904. An input/output (I/O) interface 905 is also connected to the bus 904.

In general, the following apparatuses may be connected to the I/O interface 905: an input apparatus 906, including, for example, a touch screen, a touch pad, a keyboard, a mouse, a camera, a microphone, an accelerometer, a gyroscope, and the like; an output apparatus 907, including, for example, a liquid crystal display (LCD), a speaker, a vibrator, and the like; a storage apparatus 908, including, for example, a magnetic tape, a hard disk, and the like; and a communication apparatus 909. The communication apparatus 909 may allow the electronic device 900 to communicate in a wireless or wired manner with other devices to exchange data. Although FIG. 9 illustrates the electronic device 900 having various apparatuses, it should be understood that not all illustrated apparatuses are required to be implemented or provided. More or fewer apparatuses may alternatively be implemented or provided.

In particular, according to the embodiments of the present disclosure, the processes described above with reference to the flowcharts may be implemented as computer software programs. For example, the embodiments of the present disclosure include a computer program product, which includes a computer program carried on a non-transitory computer-readable medium, and the computer program contains program codes for executing the method illustrated in the flowcharts. In such embodiments, the computer program may be downloaded and installed from a network via the communication apparatus 909, or installed from the storage apparatus 908, or installed from the ROM 902. When the computer program is executed by the processor 901, the above functions defined in the method of the embodiments of the present disclosure are executed.

The electronic device provided in the embodiment of the present disclosure and the information presentation method provided in the above embodiments belong to the same inventive concept, technical details that not described in detail in the present embodiment may refer to the above embodiments, and the present embodiment has the same effects as the above embodiments.

An embodiment of the present disclosure provides a computer-readable storage medium, storing a computer program thereon, wherein the program, when executed by a processor, implements the information presentation method provided in the above embodiments.

It should be noted that, the computer-readable medium described above in the present disclosure may be either a computer-readable signal medium or a computer-readable storage medium, or any combination of the two. The computer-readable storage medium may be, for example, but is not limited to, an electrical, magnetic, optical, electromagnetic, infrared, or semiconductor system, apparatus or device, or a combination of any of the above. More specific examples of the computer-readable storage medium may include, but are not limited to: an electrical connection having one or more wires, a portable computer magnetic disk, a hard disk, a random access memory (RAM), a read-only memory (ROM), an erasable programmable read-only memory (EPROM), a flash memory, an optical fiber, a compact disc read-only memory (CD-ROM), an optical storage device, a magnetic storage device, or any suitable combination of the above. In the present disclosure, the computer-readable storage medium may be any tangible medium that contains or stores a program that may be used by or in combination with an instruction execution system, apparatus or device. In the present disclosure, the computer-readable signal medium may include a data signal that is propagated in a baseband or used as part of a carrier, wherein the data signal carries computer-readable program codes. Such propagated data signal may take many forms, including, but not limited to, electromagnetic signals, optical signals, or any suitable combination thereof. The computer-readable signal medium may also be any computer-readable medium other than the computer-readable storage medium, and the computer-readable signal medium may send, propagate or transmit the program for use by or in combination with the instruction execution system, apparatus or device. Program codes contained on the computer-readable medium may be transmitted with any suitable medium, including, but not limited to: an electrical wire, an optical cable, radio frequency (RF), and the like, or any suitable combination thereof.

In some embodiments, a client and a server may perform communication by using any currently known or future-developed network protocol, such as an HTTP (HyperText Transfer Protocol), and may be interconnected with any form or medium of digital data communication (e.g., a communication network). Examples of the communication network include a local area network (LAN), a wide area network (WAN), an international network (e.g., the Internet), and a peer-to-peer network (e.g., an ad hoc peer-to-peer network), as well as any currently known or future-developed network.

The computer-readable storage medium may be contained in the above electronic device; and it may also be present separately and is not assembled into the electronic device.

The computer-readable medium carries at least one program that, when executed by the electronic device, causes the electronic device to: present a media playing interface in response to a first trigger operation input by a first user, wherein basic media information of a target media is presented in the media playing interface; and
in response to a second trigger operation for triggering the presentation of media recommendation information, present, in the media playing interface, at least one piece of media recommendation information associated with the target media.

Computer program codes for executing the operations of the present disclosure may be written in at least one programming language or combinations thereof. The programming languages include, but are not limited to, object node-oriented programming languages, such as Java, Smalltalk, C++, and conventional procedural programming languages, such as the "C" language or similar programming languages. The program codes may be executed entirely on a first user computer, executed partly on the first user computer, executed as a stand-alone software package, executed partly on the first user computer and partly on a remote computer, or executed entirely on the remote computer or a server. In the case involving the remote computer, the remote computer may be connected to the first user computer through any type of network, including a local area network (LAN) or a wide area network (WAN), or it may be connected to an external computer (e.g., through the Internet using an Internet service provider).

The flowcharts and block diagrams in the drawings illustrate system architectures, functions and operations of possible implementations of systems, methods and computer program products according to various embodiments of the present disclosure. In this regard, each block in the flowcharts or block diagrams may represent a part of a module, a program segment, or a code, which contains at least one executable instruction for implementing specified logical functions. It should also be noted that, in some alternative implementations, the functions annotated in the blocks may occur out of the sequence annotated in the drawings. For example, two blocks shown in succession may, in fact, be executed substantially in parallel, or the blocks may sometimes be executed in a reverse sequence, depending upon the functions involved. It should also be noted that each block in the block diagrams and/or flowcharts, and combinations of the blocks in the block diagrams and/or flowcharts may be implemented by dedicated hardware-based systems for executing specified functions or operations, or combinations of dedicated hardware and computer instructions.

The units involved in the described embodiments of the present disclosure may be implemented in a software or hardware manner. The names of the units do not constitute limitations of the units themselves in a certain case. For example, a first acquisition unit may also be described as "a unit for acquiring at least two Internet protocol addresses".

The functions described herein above may be executed, at least in part, by at least one hardware logical component. For example, without limitation, example types of the hardware logical components that may be used include: a field programmable gate array (FPGA), an application specific integrated circuit (ASIC), an application specific standard product (ASSP), a system on chip (SOC), a complex programmable logic device (CPLD), and so on.

In the context of the present disclosure, a machine-readable medium may be a tangible medium, which may contain or store a program for use by or in combination with the instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination thereof. Examples of the machine-readable storage medium would include an electrical connection based on at least one wire, a portable computer disk, a hard disk, a random access memory (RAM), a read-only memory (ROM), an erasable programmable read-only memory (EPROM), a flash memory, an optical fiber, a compact disc read-only memory (CD-ROM), an optical storage device, a magnetic storage device, or any suitable combination thereof.

According to at least one embodiment of the present disclosure, Example 1 provides an information presentation method, including:
presenting a media playing interface in response to a first trigger operation input by a first user, wherein basic media information of a target media is presented in the media playing interface; and
in response to a second trigger operation for triggering the presentation of media recommendation information, presenting, in the media playing interface, at least one piece of media recommendation information associated with the target media.

According to at least one embodiment of the present disclosure, Example 2 provides an information presentation method, including:
optionally, the method further includes: before presenting, in the media playing interface, the at least one piece of media recommendation information associated with the target media,
presenting an information posting interface in response to a third trigger operation for triggering the presentation of the information posting interface, wherein an information input box and an information posting control are presented in the information posting interface; and
receiving media recommendation information input by a second user based on the information input box and associated with the target media, and posting the media recommendation information in response to a fourth trigger operation acting on the information posting control.

According to at least one embodiment of the present disclosure, Example 3 provides an information presentation method, including:
optionally, the information posting interface includes a comment posting interface, an information type determination control is further presented in the comment posting interface, the information type determination control is configured to determine an information posting type of information to be posted, and the information posting type includes at least one of media comment information or media recommendation information; and receiving the media recommendation information input by the second user based on the information input box and associated with the target media includes:
receiving the information to be posted input based on the information input box; and
determining, based on the information type determination control, that an information type of the information to be posted includes media recommendation information, and using the information to be posted as the media recommendation information associated with the target media.

According to at least one embodiment of the present disclosure, Example 4 provides an information presentation method, further including:
skipping to the comment posting interface in response to receiving a fifth trigger operation input for the media recommendation information.

According to at least one embodiment of the present disclosure, Example 5 provides an information presentation method, further including:
optionally, skipping to the comment posting interface includes:
skipping to the comment posting interface, and presenting comment information associated with the target media.

According to at least one embodiment of the present disclosure, Example 6 provides an information presentation method, further including:
optionally,
skipping to the comment posting interface includes:
skipping to the comment posting interface, and presenting, in the comment posting interface, the media recommendation information associated with the target media, wherein the media recommendation information is highlighted and presented in a first preset manner.

According to at least one embodiment of the present disclosure, Example 7 provides an information presentation method, further including:
optionally, skipping to the comment posting interface includes:
skipping to the comment posting interface in response to determining that the comment posting interface includes media comment information the same as the media recommendation information, wherein the media comment information the same as the media recommendation information is highlighted and presented in the comment posting interface in a second preset manner.

According to at least one embodiment of the present disclosure, Example 8 provides an information presentation method, further including:
optionally, the method further includes: before presenting, in the media playing interface, the at least one piece of media recommendation information associated with the target media,
clustering a media in a media library according to a music style of at least part of media which the first user has collected, so as to obtain a media pool corresponding to the music style; and
in response to determining that the target media satisfies a preset recommendation condition in the media pool, and that the first user does not collect the target media, generating the media recommendation information based on a total number of users who have collected the target media.

According to at least one embodiment of the present disclosure, Example 9 provides an information presentation method, further including:
optionally, the method further includes: before presenting, in the media playing interface, the at least one piece of media recommendation information associated with the target media,
generating the media recommendation information according to a total number of playing users who have ever played the target media and a preset number interval of playing users.

According to at least one embodiment of the present disclosure, Example 10 provides an information presentation method, further including:
optionally, classifying the media in the media library to obtain at least two media pools, wherein each media pool includes at least one media; and
determining, from the at least two media pools, a target media pool to which the target media belongs, and generating the media recommendation information according to the total number of playing users who have ever played the target media and the preset number interval of playing users corresponding to the target media pool.

According to at least one embodiment of the present disclosure, Example 11 provides an information presentation method, further including:
optionally, the method further includes: before presenting, in the media playing interface, the at least one piece of media recommendation information associated with the target media,
determining a reference fallback parameter of the target media, wherein the reference fallback parameter includes a total number of playing users who have ever played the target media, a number of comments for the target media, and a number of media likes for the target media; and
using, as a target fallback parameter, a parameter having a maximum number among the total number of playing users, the number of comments and the number of media likes, and generating the media recommendation information based on the target fallback parameter.

According to at least one embodiment of the present disclosure, Example 12 provides an information presentation method, further including:
optionally, presenting, in the media playing interface, at least one piece of media recommendation information associated with the target media includes:
in response to determining that there are at least two pieces of media recommendation information to be presented, presenting a preset number of pieces of media recommendation information in the media playing interface according to a preset presentation policy, wherein the preset presentation policy includes at least one of a posting time, a preset presentation priority, a matching degree with the first user, or an information popularity of each piece of media recommendation information.

According to at least one embodiment of the present disclosure, Example 13 provides an information presentation method, further including:
optionally, presenting, in the media playing interface, at least one piece of media recommendation information associated with the target media includes:
in response to determining that there are at least two pieces of media recommendation information to be presented, presenting a first number of pieces of media recommendation information in the media playing interface, and hiding media recommendation information in addition to the first number of pieces of media recommendation information; and
receiving an information presentation switching operation for switching the media recommendation information, and presenting, in the media playing interface, a second number of pieces of media recommendation information in the hidden media recommendation information, wherein the second number is less than or equal to a difference value between a total number of pieces of media recommendation information to be presented and the first number.

According to at least one embodiment of the present disclosure, Example 14 provides an information presentation method, further including:
optionally, presenting, in the media playing interface, at least one piece of media recommendation information associated with the target media includes:
in response to determining that there is the media recommendation information posted by the first user and associated with the target media, presenting, in the media playing interface, the media recommendation information posted by the first user.

According to at least one embodiment of the present disclosure, Example 15 provides an information presentation apparatus, including:
an interface presentation module, configured to present a media playing interface in response to a first trigger operation input by a first user, wherein basic media information of a target media is presented in the media playing interface; and
an information presentation module, configured to: in response to a second trigger operation for triggering the presentation of media recommendation information, present, in the media playing interface, at least one piece of media recommendation information associated with the target media.

What have been described above are only preferred embodiments of the present disclosure and illustrations of the technical principles employed. It should be understood by those skilled in the art that, the disclosure scope involved in the preset disclosure is not limited to the technical solutions formed by specific combinations of the above technical features, and meanwhile should also include other technical solutions formed by any combinations of the above technical features or equivalent features thereof without departing from the concept of the disclosure, for example, technical solutions formed by mutual replacement of the above features with technical features having similar functions disclosed in the present disclosure (but is not limited to).

## Claims

1. An information presentation method, comprising:
presenting a media playing interface in response to a first trigger operation input by a first user, wherein basic media information of a target media is presented in the media playing interface; and
in response to a second trigger operation for triggering the presentation of media recommendation information, presenting, in the media playing interface, at least one piece of media recommendation information associated with the target media.

2. The information presentation method according to claim 1, further comprising: before presenting, in the media playing interface, the at least one piece of media recommendation information associated with the target media,
presenting an information posting interface in response to a third trigger operation for triggering the presentation of the information posting interface, wherein an information input box is presented in the information posting interface; and
receiving media recommendation information input by a second user based on the information input box and associated with the target media, and posting the media recommendation information in response to a fourth trigger operation.

3. The information presentation method according to claim 2, wherein the information posting interface comprises a comment posting interface, an information type determination control is further presented in the comment posting interface, the information type determination control is configured to determine an information posting type of information to be posted, and the information posting type comprises at least one of media comment information or media recommendation information; and
wherein receiving the media recommendation information input by the second user based on the information input box and associated with the target media comprises:
receiving the information to be posted input based on the information input box; and
determining, based on the information type determination control, that the information type of the information to be posted comprises media recommendation information, and using the information to be posted as the media recommendation information associated with the target media.

4. The information presentation method according to claim 3, further comprising:
skipping to the comment posting interface in response to receiving a fifth trigger operation input for the media recommendation information.

5. The information presentation method according to claim 4, wherein skipping to the comment posting interface comprises:
skipping to the comment posting interface, and presenting comment information associated with the target media.

6. The information presentation method according to claim 4, wherein skipping to the comment posting interface comprises:
skipping to the comment posting interface, and presenting, in the comment posting interface, the media recommendation information associated with the target media, wherein the media recommendation information is highlighted and presented in a first preset manner.

7. The information presentation method according to claim 4, wherein skipping to the comment posting interface comprises:
skipping to the comment posting interface in response to determining that the comment posting interface comprises media comment information the same as the media recommendation information, wherein the media comment information the same as the media recommendation information is highlighted and presented in the comment posting interface in a second preset manner.

8. The information presentation method according to claim 1, further comprising: before presenting, in the media playing interface, the at least one piece of media recommendation information associated with the target media,
clustering a media in a media library according to a music style of at least part of media which the first user has collected, so as to obtain a media pool corresponding to the music style; and
in response to determining that the target media satisfies a preset recommendation condition in the media pool, and that the first user does not collect the target media, generating the media recommendation information based on a total number of users who have collected the target media.

9. The information presentation method according to claim 1, further comprising: before presenting, in the media playing interface, the at least one piece of media recommendation information associated with the target media,
generating the media recommendation information according to a total number of playing users who have ever played the target media and a preset number interval of playing users.

10. The information presentation method according to claim 9, wherein generating the media recommendation information according to the total number of playing users who have ever played the target media and the preset number interval of playing users comprises:
classifying the media in the media library to obtain at least two media pools, wherein each media pool comprises at least one media; and
determining, from the at least two media pools, a target media pool to which the target media belongs, and generating the media recommendation information according to the total number of playing users who have ever played the target media and the preset number interval of playing users corresponding to the target media pool.

11. The information presentation method according to claim 1, further comprising: before presenting, in the media playing interface, the at least one piece of media recommendation information associated with the target media,
determining a reference fallback parameter of the target media, wherein the reference fallback parameter comprises a total number of playing users who have ever played the target media, a number of comments for the target media, and a number of media likes for the target media; and
using, as a target fallback parameter, a parameter having a maximum number among the total number of playing users, the number of comments and the number of media likes, and generating the media recommendation information based on the target fallback parameter.

12. The information presentation method according to claim 1, wherein presenting, in the media playing interface, at least one piece of media recommendation information associated with the target media comprises:
in response to determining that there are at least two pieces of media recommendation information to be presented, presenting a preset number of pieces of media recommendation information in the media playing interface according to a preset presentation policy, wherein the preset presentation policy comprises at least one of a posting time, a preset presentation priority, a matching degree with the first user, or an information popularity of each piece of media recommendation information.

13. The information presentation method according to claim 1, wherein presenting, in the media playing interface, at least one piece of media recommendation information associated with the target media comprises:
in response to determining that there are at least two pieces of media recommendation information to be presented, presenting a first number of pieces of media recommendation information in the media playing interface, and hiding media recommendation information in addition to the first number of pieces of media recommendation information; and
receiving an information presentation switching operation for switching the media recommendation information, and presenting, in the media playing interface, a second number of pieces of media recommendation information in the hidden media recommendation information, wherein the second number is less than or equal to a difference value between a total number of pieces of media recommendation information to be presented and the first number.

14. The information presentation method according to claim 1, wherein presenting, in the media playing interface, at least one piece of media recommendation information associated with the target media comprises:
in response to determining that there is the media recommendation information posted by the first user and associated with the target media, presenting, in the media playing interface, the media recommendation information posted by the first user.

15. An information presentation apparatus, comprising:
an interface presentation module (810), configured to present a media playing interface in response to a first trigger operation input by a first user, wherein basic media information of a target media is presented in the media playing interface; and
an information presentation module (820), configured to: in response to a second trigger operation for triggering the presentation of media recommendation information, present, in the media playing interface, at least one piece of media recommendation information associated with the target media.

16. An electronic device, comprising:
at least one processor; and
a storage apparatus, configured to store at least one program,
wherein when the at least one program is executed by the at least one processor, the at least one processor is caused to implement the information presentation method according to any one of claims 1-14.

17. A readable storage medium, comprising a computer program, wherein the computer program, when executed by a computer processor, is configured to execute the information presentation method according to any one of claims 1-14.
